# EUROPEAN PATENT SPECIFICATION

(11) **EP 2 332 824 B1**
(45) Date of publication and mention of the grant of the patent: **19.09.2012**
(21) Application number: 10193905.6
(22) Date of filing: 07.12.2010
(51) Int. Cl.: B63H 5/14, B63H 23/24, F16C 17/03, F16C 17/06, F16C 17/22

(54) **Bearing structure, and propeller device equipped with such bearing structure.**
Lagerstruktur, und Propeller ausgestattet mit solch einer Lagerstruktur
Structure de palier, et hélice équipée avec cette structure de palier

(30) Priority: 11.12.2009 NL 2003946
(43) Date of publication of application: 15.06.2011
(73) Proprietor: Marifin Beheer B.V., 2931 AD Krimpen aan de Lek (NL)
(72) Inventor: van Buren, Edwin Simon, 2935 VC Ouderkerk a/d IJssel (NL)
(74) Representative: van Westenbrugge, Andries

(56) References cited:
- EP-A1- 1 739 007
- WO-A1-01/92101
- DE-A1-102004 028 773
- DE-A1-102007 050 066
- US-A- 5 775 816
- US-A1- 2003 186 601
- US-A1- 2007 253 821
- US-B1- 6 315 453

## Description

The invention relates to a bearing structure between a rotor and a sleeve, such as in a shaftless screw device, comprising at least one axial bearing and one radial bearing, each of which comprises a series of tilting pads extending in the peripheral direction and which are each suspended from a pad suspension area of one of either the rotor or the sleeve by means of pad fastenings which allow tilting, which tilting pads each have a contact surface, and a bearing ring which is situated opposite the series of tilting pads, cooperates with the contact surfaces thereof and is suspended from a bearing ring suspension area of the other of either the rotor or the sleeve by means of bearing ring fastenings. The axial bearing absorbs the axial load which is directed along the axis of rotation of the bearing structure. The radial bearing absorbs the radial load which is directed transversely to the axis of rotation.

Such a bearing structure is known from EP-A-1739007 which constitutes the closest prior art and is suitable for many different applications, such as in the propulsion device of a ship, inter alia. Reference is made to a screw device which is known per se in which the screw blades protrude inwards from the rotor, which screw blades are optionally connected to a central flow body at their inner end. In that case, the inner wall of the rotor forms part of a jet pipe, which is known to have an advantageous effect on the efficiency of the screw.

Such a bearing structure with tilting pads is water-lubricated, which has the advantage that bearing seals can be omitted. This results in a simple, reliable bearing structure. The bearing pads are tiltably connected to the sleeve and adjust according to the rotation of the rotor. As the water may contain contaminants, it is important to adapt the cooperating surfaces of the tilting pads and of the rotor materials thereto. It is known to select a relatively hard material, such as a metal, as the bearing surface of the sleeve. In combination with the latter, the bearing surface of the tilting pads is then made from a relatively soft material, such as a plastic. In particular, it is known to use high-density polyethylene (HDPE) therefor, although other plastics are also suitable.

The advantage of such a combination is that any contaminants can be absorbed by the relatively soft plastic material of the rotor. This prevents the relatively hard contaminants from being able to cause damage, such as scratches and the like. In addition, it is important that such a rotor, when stationary, can withstand permanent deformations which could occur as a result of the force of gravity. Such deformations are largely prevented by the fact that, during the life of the rotor, said rotor always stops in different positions, viewed in the direction of rotation, so that the entire surface of the rotor is loaded evenly.

Although such a bearing structure in itself brings good results, problems can nevertheless occur due to the relatively large coefficient of expansion of the plastic material. In this case, both the temperature of the ambient water and the heating-up of the bearing structure as a result of the rotation thereof play a part. However, the deformation of the plastic parts of the rotor has a negative impact on the correct mounting of the screw. If the surfaces of the tilting pads and of the rotor assume a different position with respect to one another, it can no longer be ensured that a water film builds up between these parts during the rotation thereof. The result is that the bearing structure is then subjected to increased wear and will eventually fail.

It is therefore an object of the invention to provide a bearing structure of the above-described type which is better able to withstand variations in temperature. This object is achieved by the fact that the bearing ring fastenings allow contraction and expansion movements, such as axial and/or radial movements, of the bearing ring with respect to the bearing ring suspension area wherein the bearing ring has an edge which is hook-shaped in longitudinal section and the bearing ring suspension area has a nose in longitudinal section around which the hook-shaped edge of the bearing ring extends.

With the bearing structure according to the invention, the fact that the plastic material is prone to expansion as a result of temperature differences is taken into account by the fact that the bearing ring fastenings allow the bearing ring a certain degree of movement with respect to the bearing ring suspension area. As a result, the surface of the bearing ring cooperating with the tilting pads is prevented from deforming to such a degree that the desired cooperation between said parts would be lost.

In particular, it may be provided that the bearing ring fastenings allow axial and/or radial movements. A movement in the axial direction of the material of the bearing ring does not result in deformation which adversely affects the operation of the bearing structure since the surface of the bearing pads of the radial bearing also extends in said axial direction. The same applies to radial movements of the bearing ring at the location of the radially directed bearing pads. Such a possible axial or radial movement of the bearing ring can be brought about in various ways, for example by using slotted holes through which bolts or pins extend.

The longitudinal section is determined by the cross section which coincides with the axis of rotation of the bearing structure.

The hook-like shape of the edge of the bearing ring makes movements possible in the axial or radial direction with respect to the bearing ring suspension area, wherein it is ensured that the bearing ring is held in a stable position by the cooperation between the hook-like shape and the nose of said bearing ring suspension area. Depending on the temperature of the bearing ring as a result of rotation and/or the water temperature, the bearing ring can expand to a greater or lesser degree. In this case, the contact surface of the bearing ring will retain the desired shape, so that the operation of the bearing structure is maintained.

According to a further embodiment, the hook-shaped edge and the nose can cooperate with one another by means of a tenon-mortise joint which allows axial and radial movements, respectively.

According to another possibility, the bearing ring may have at least one hole through which a fastening bolt extends which may optionally be accommodated in a mounting bush. An optional mounting bush is clamped between the head of the bolt and the bearing ring suspension area. The fact that the head of the bolt rests against the mounting bush, which in turn rests on the rotor, ensures a strong, reliable fastening of the bearing ring to the rotor. On the other hand, the relatively soft plastic material of the bearing ring is prevented from being compressed excessively and possibly starting to creep as a result of the excessive compressive force.

In particular, the mounting bush may have an external collar while the hole in the bearing ring may have a narrowing which is covered by the collar. This external collar keeps the bearing ring in the desired position with respect to the rotor. In particular, the narrowing of the bearing ring may be clamped between the collar and the bearing ring suspension area. As a result thereof, the bearing ring is safely secured against movements at right angles to the bearing ring suspension area.

The bearing ring may be configured as an L-shape in longitudinal section in a known manner. In this case, one of the legs of the bearing ring may be directed axially while the other leg is directed radially. The bearing ring suspension area may then also be correspondingly L-shaped with an axial and/or radial section, the free end of which forms the nose. In that case, the hook-like shape is situated on the end of the leg of the bearing ring which extends in the axial and/or radial direction. It is also possible to configure the abovementioned hole in the axial leg and/or in the radial leg as a slotted hole. In this case, axial or radial movements are possible. However, if the mounting bush is accommodated in the hole in the bearing ring in a tight-fitting manner, movements parallel to the bearing ring suspension area are prevented. According to a further variant, one of the legs of the bearing ring may be displaceably suspended by means of the hook edge and nose, while the other leg may be displaceably suspended by means of a fastening bolt or fastening pin which cooperates with a slotted hole. Incidentally, it is also possible to use a hole which is oversized with respect to the fastening bolt or fastening pin instead of a slotted hole. Furthermore, it is for example also possible to use a clamping device in order to make the desired movement possible.

In the peripheral direction, the bearing ring may comprise several bearing ring parts. In that case, each of these bearing ring parts is attached to the rotor in the above-described manner.

The invention furthermore relates to a screw device, comprising a sleeve and a rotor provided with screw blades which is rotatably suspended with respect to the sleeve by means of a bearing structure as described above, wherein the sleeve is provided with the stator of an electric motor and the rotor with the associated permanent magnets.

The invention will be described below with reference to an exemplary embodiment which is illustrated in the figures, in which:
Fig. 1 shows a view in perspective and in longitudinal section of a screw with a bearing structure according to the invention;
Fig. 2 shows a front view of the screw from Fig. 1;
Fig. 3 shows the longitudinal section along III-III in Fig. 2;
Fig. 4 shows the longitudinal section along IV-IV in Fig. 2;
Fig. 5 shows the longitudinal section along V-V in Fig. 2.

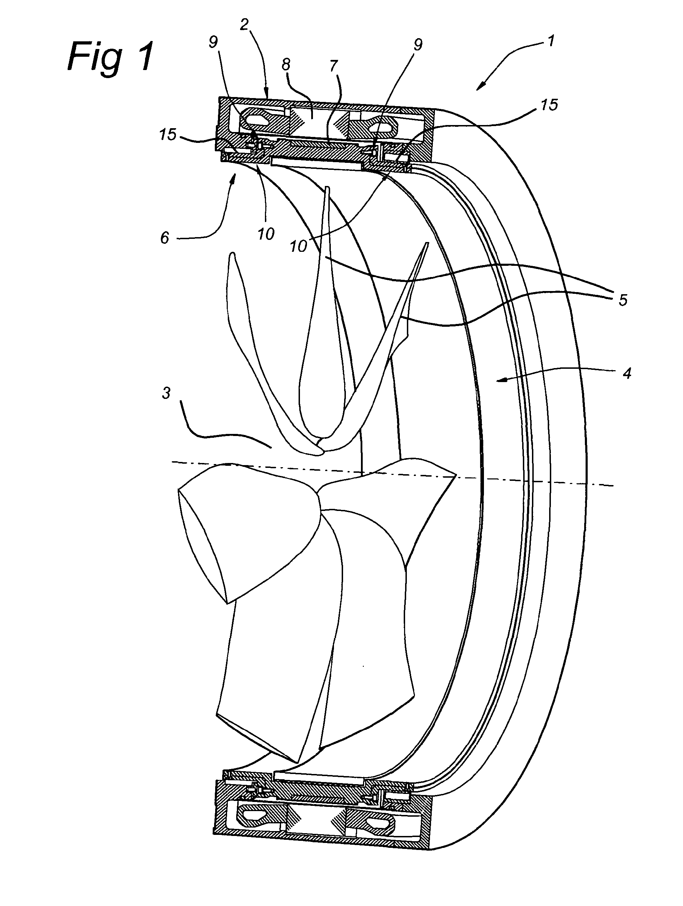

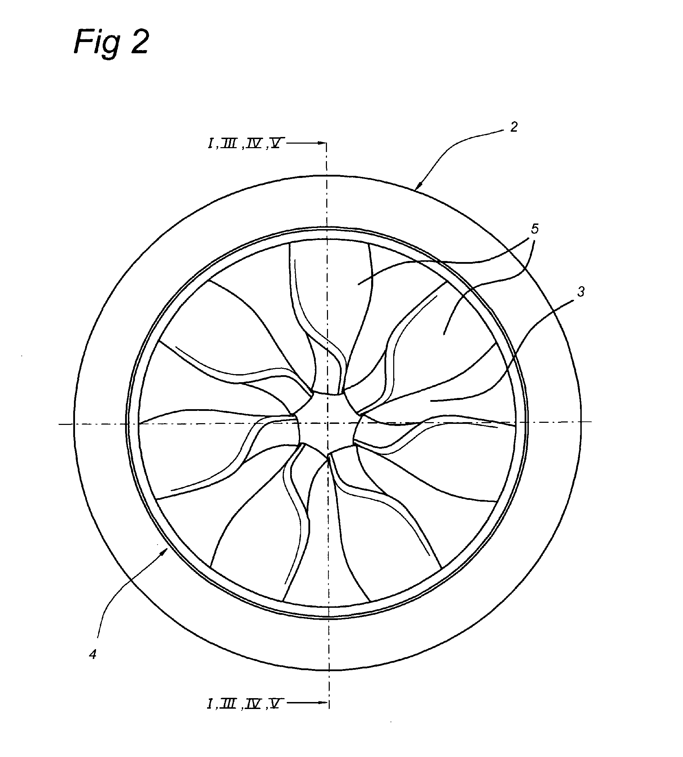

The screw according to the invention and illustrated in Figs. 1 and 2 consists of the sleeve which is denoted overall by reference numeral 2 and comprises a circular opening 3. The rotor 4 is mounted in this opening 3. This rotor 4 has a ring-shaped rotor body 6 and screw blades 5 which protrude inwards from the ring-shaped rotor body 6. Along its circumference, the ring-shaped rotor body 6 is provided with permanent magnets 7 which can cooperate with the stator windings 8 which are provided around the opening 3 of the sleeve 2 and serve to drive the rotor 4.

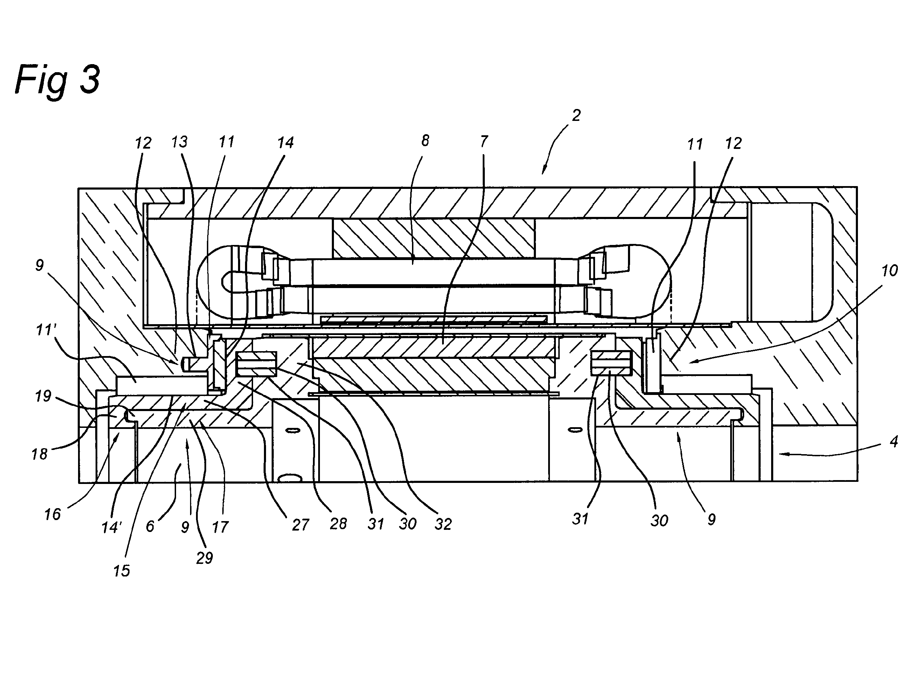

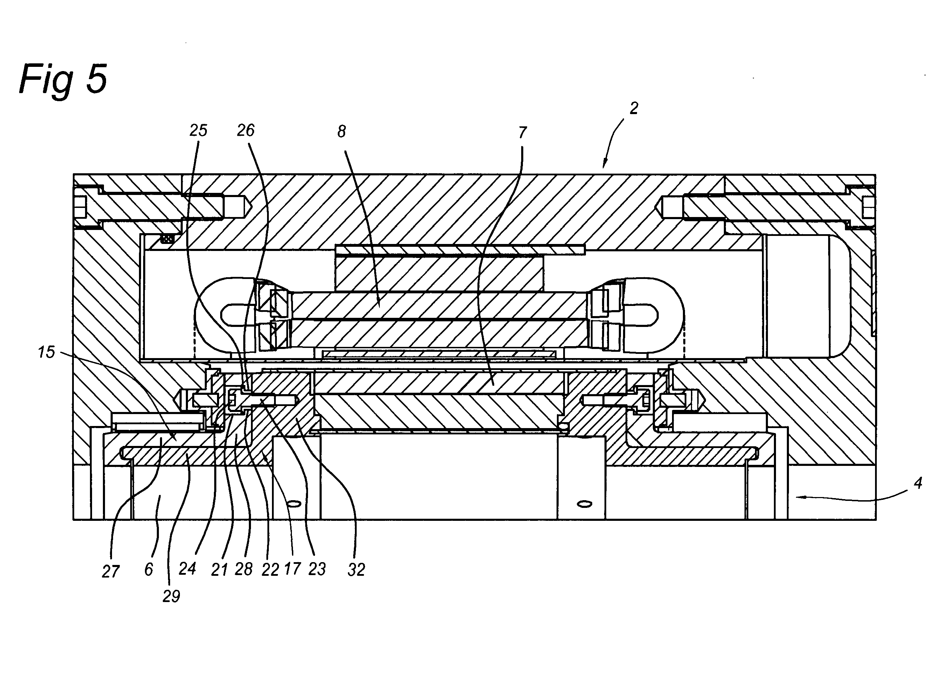

The rotor 4 is suspended in the sleeve 2 by means of a bearing structure which has an axial bearing 9 and a radial bearing 10 at each axial end. The axial bearings 9 can absorb opposing axial forces, which makes it possible to drive the screw in both directions. In Figs. 3-5, these bearings 9, 10 are illustrated on an enlarged scale, namely according to the longitudinal sections as illustrated in Fig. 2.

A pair consisting of an axial bearing 9 and a radial bearing 10 comprises the bearing ring 15 which is L-shaped in longitudinal section and the series of tilting pads 11 which extend in the peripheral direction and have a radially extending contact surface 14, and of tilting pads 11' which have an axially extending contact surface 14'. Each axial bearing 9 therefore consists of the radial tilting pad bearings 11 and the radial leg 28 of the bearing ring 15. Each radial bearing 10 in turn consists of the axial tilting pad bearings 11' and the axial leg 27 of the bearing ring 15. The tilting pads 1 l, 11' are each suspended by means of a pad fastening 13 from the pad suspension area 12, more particularly in such a manner that the tilting pads can tilt slightly with respect to said pad suspension area 12. Such a suspension is known per se and will therefore not be described in detail.

The contact surface 14, 14' of the tilting pads 11, 11' consists of a relatively hard material, such as a metal. By means of said contact surface 14, 14', the tilting pads 11, 11' cooperate with the respective surfaces of the legs 28, 27 of the bearing ring 15. This bearing ring 15 consists of a relatively soft material, in particular high-density polyethylene. As is known, such material has a relatively high coefficient of expansion, so that the bearing ring 15 will expand or shrink relatively significantly when temperature variations occur. In order to prevent the bearing ring from deforming in an undesirable manner as a result thereof, and to prevent the bearing structure from failing, measures are taken which allow for a certain degree of movement of the bearing ring 15.

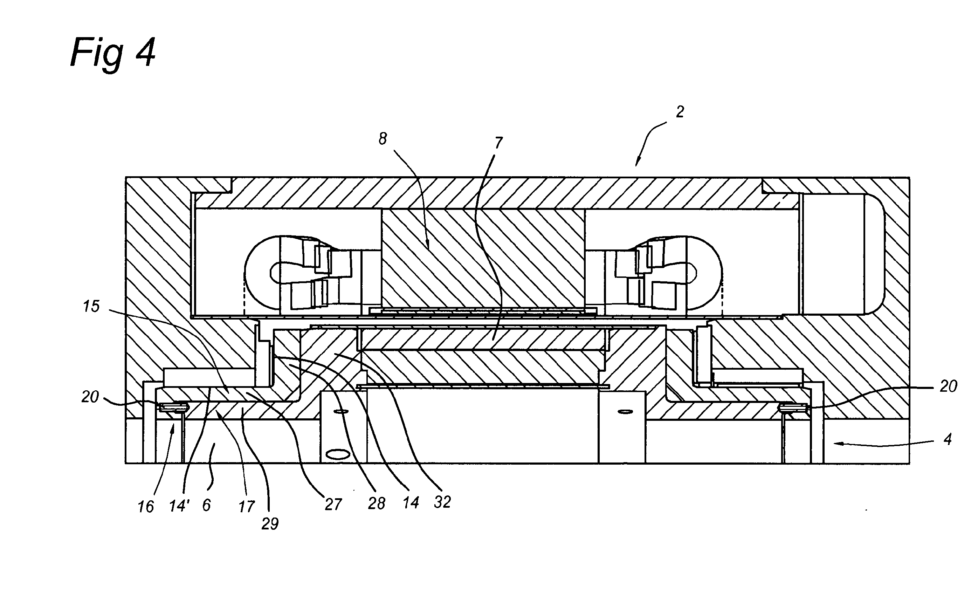

According to a first measure, the axial leg 27 of the bearing ring 15 may expand or contract slightly in the axial direction. In order to achieve this, a hook-shaped edge 18 is formed on said axial leg 27 of the bearing ring 15 and is hooked around the nose 19 of the bearing ring suspension area 17 of the rotor 4. When the axial leg 27 expands, this hook-shaped edge 18 can move slightly in the axial direction, along the nose 19, without this resulting in the loss of support from the bearing ring 15, however. In this connection, it is also possible to provide the tenon-mortise joints 20 in said location, as is illustrated in the longitudinal section in Fig. 4.

Although the illustrated exemplary embodiment makes axial movements possible, an embodiment (not shown) which makes radial movements possible is also possible. In this case, the nose is situated on the radial section of the bearing ring suspension area and the hook-shaped edge is situated on the radial leg. It is also possible to provide tenon-mortise joint. Combinations of these two embodiments are also possible.

In the illustrated exemplary embodiment, the radial leg 28 of the bearing ring 15 is provided with a hole 21, which comprises the narrowing 26. A mounting bush 22 is fitted in the hole 21, provided with a collar 25 which is directed radially outwards and extends over the narrowing 26. The fastening bolt 23 is fitted in the mounting bush 22 and screwed into the bearing ring suspension area 17 by means of a threaded connection. In this case, the head 24 of the fastening bolt 23 rests on the collar 25 in such a manner that a strong fastening is ensured. On the other hand, the mounting bush which rests on the bearing ring suspension area 17 prevents the material of the bearing ring 15 from being compressed excessively. In addition to the bolt connection, the pins 30 are also fitted, as is illustrated in the longitudinal section in Fig. 3, and extend through the corresponding apertures 31 of the radial leg 28 of the bearing ring 15.

The holes 21 and 31 can also be configured as slotted holes or as oversized holes with a larger tolerance, in such a manner that movements of the radial leg 28 of the bearing ring 15 in the radial direction with respect to the radial section 32 of the bearing ring suspension area are possible. In this way, it is furthermore possible to also make the axial movement of the axial leg 27 of the bearing ring 15 with respect to the axial section 29 possible. Combinations of these two embodiments are also possible.

List of reference numerals
- 1.: Screw
- 2.: Sleeve
- 3.: Opening
- 4.: Rotor
- 5.: Screw blade
- 6.: Rotor body
- 7.: Permanent magnet
- 8.: Stator winding
- 9.: Axial bearing
- 10.: Radial bearing
- 11.: Tilting pad (axial bearing)
- 11'.: Tilting pad (radial bearing)
- 12.: Pad suspension area
- 13.: Pad fastening
- 14.: Contact surface of tilting pad 11
- 14'.: Contact surface of tilting pad 11'
- 15.: Bearing ring
- 16.: Bearing ring fastening
- 17.: Bearing ring suspension area
- 18.: Hook-shaped edge of bearing ring
- 19.: Nose of bearing ring suspension area
- 20.: Tenon-mortise joint
- 21.: Hole in bearing ring
- 22.: Mounting bush
- 23.: Fastening bolt
- 24.: Head of fastening bolt
- 25.: Collar of mounting bush
- 26.: Narrowing of hole
- 27.: Axial leg of bearing ring
- 28.: Radial leg of bearing ring
- 29.: Axial section of bearing ring suspension area
- 30.: Pin
- 31.: Hole for pin
- 32.: Radial section of bearing ring suspension area

## Claims

1. Bearing structure between a rotor (4) and a sleeve (2), such as in a screw device, comprising at least one axial bearing (9) and one radial bearing (10) each of which comprises a series of tilting pads extending in the peripheral direction (11, 11') and which are each suspended from a pad suspension area (12) of one of either the rotor (4) or the sleeve (2) by means of pad fastenings (13) which allow tilting, which tilting pads (11, 11') each have a contact surface (14, 14'), and a bearing ring (15) which is situated opposite the series of tilting pads (11, 11'), cooperates with the contact surfaces (14, 14') thereof and is suspended from a bearing ring suspension area (17) of the other of either the rotor (4) or the sleeve (2) by means of bearing ring fastenings (16), **characterized in that** the bearing ring fastenings (16) allow contraction and expansion movements, such as axial and/or radial movements, ofthe bearing ring (15) with respect to the bearing ring suspension area (17) the bearing ring (15) has an edge (18) which is hook-shaped in longitudinal section and the bearing ring suspension area (17) has a nose (19) in longitudinal section around which the hook-shaped edge (18) of the bearing ring (15) extends.>

2. Bearing structure according to Claim 1, wherein the hook-shaped edge (18) and the nose (19) cooperate with one another by means of a tenon-mortise joint (20) which allows movements along the axis of said joint (20).

3. Bearing structure according to one of the preceding claims, wherein the bearing ring (15) has at least one hole (21) through which a fastening bolt (23) or fastening pin extends which cooperates with the bearing ring suspension area (17), which fastening bolt (23) or fastening pin is fitted in the hole (21) with play, for example in a slotted hole or oversized hole.

4. Bearing structure according to Claim 3, wherein the fastening bolt (23) is accommodated in a mounting bush (22) which is clamped between the head (24) of the bolt (23) and the bearing ring suspension area (17).

5. Bearing structure according to Claim 4, wherein the mounting bush (22) has an external collar (25) and the hole (21) in the bearing ring (15) has a narrowing (26) which is covered by the collar (25).

6. Bearing structure according to Claim 5, wherein the narrowing (26) is clamped between the collar (25) and the bearing ring suspension area (17).

7. Bearing structure according to one of Claims 4-6, wherein the mounting bush (22) is accommodated in the hole (21) in the bearing ring (15) in a tight-fitting manner.

8. Bearing structure according to one ofthe preceding claims, wherein the bearing ring (15) is L-shaped in longitudinal section, and one (27) of the legs of the bearing ring (15) is directed axially and the other leg (28) is directed radially and the bearing ring suspension area (7) is correspondingly L-shaped.

9. Bearing structure according to claim 1 wherein the L-shaped bearing ring suspension area (17) has an axial section (29), the free end of which forms the nose (19) and the hook-shaped edge (18) of the bearing ring (15) is situated at the axial leg (27).

10. Bearing structure according to Claim 1, wherein the L-shaped bearing ring suspension area (17) has a radial section (32), the free end of which forms the nose (19) and the hook-shaped edge (18) of the bearing ring (15) is situated at the radial leg (28).

11. Bearing structure according to Claim 1 if dependent on one of Claims 3-6, wherein the hole (21) is situated in the axial leg (27) of the bearing ring (15) and the fastening bolt (23) or fastening pin (30) cooperates with the axial section (29) of the bearing ring suspension area (17).

12. Bearing structure according to Claim 1 if dependent on one of Claims 3-6, wherein the hole (21) is situated in the radial leg (28) of the bearing ring (15) and the fastening bolt (23) or fastening pin (30) cooperates with the radial section (32) of the bearing ring suspension area (17).

13. Bearing structure according to one ofthe preceding claims, wherein the bearing ring (15) comprises several bearing ring parts in the peripheral direction.

14. Screw device, comprising a sleeve (2) and a rotor (4) provided with screw blades (5) which is rotatably suspended with respect to the sleeve (2) by means of a bearing structure according to one of the preceding claims, wherein the sleeve (2) is provided with the stator windings (8) of an electric motor and the rotor (4) with the associated permanent magnets (7).

## Patentansprüche

1. Lagerstruktur zwischen einem Rotor (4) und einem Laufkranz (2), wie etwa in einer Schraubenvorrichtung, umfassend wenigstens ein Axiallager (9) und ein Radiallager (10), die jeweils eine Abfolge von Kippsegmenten enthalten, die sich in einer Umfangsrichtung (11, 11') erstrecken und an einem Segmentträgerbereich (12) entweder des Rotors (4) oder des Laufkranzes (2) mit Hilfe von Segmentbefestigungseinrichtungen (13) aufgehängt sind, die ein Kippen gestatten, wobei die Kippsegmente (11, 11') jeweils eine Kontaktfläche (14, 14') haben, und einen Lagerring (15), der gegenüberliegend der Abfolge von Kippsegmenten (11, 11') angeordnet ist, mit den Kontaktflächen (14, 14') derselben zusammenwirkt und an einem Lagerring-Aufhängungsbereich (17) des entsprechenden anderen Teils von entweder Rotor (4) oder Laufkranz (2) mit Hilfe von Lagerringbefestigungseinrichtungen (16) aufgehängt ist, wobei die Lagerringbefestigungseinrichtungen (16) Kontraktions- und Expansionsbewegungen, wie etwa axiale und/oder radiale Bewegungen, des Lagerrings (15) im Bezug auf den Lagerring-Aufhängungsbereich (17) gestatten, **dadurch gekennzeichnet, dass** der Lagerring (15) einen Rand (18) hat, der im Längsschnitt hakenförmig ist, und der Lagerring-Aufhängungsbereich (17) im Längsschnitt eine Nase (19) hat, um die sich der hakenförmige Rand (18) des Lagerrings (15) erstreckt.

2. Lagerstruktur nach Anspruch 1, bei der der hakenförmige Rand (18) und die Nase (19) mit Hilfe einer Schlitz-und-Zapfenverbindung (20) zusammenwirken, die Bewegungen entlang der Verbindungsachse gestattet.

3. Lagerstruktur nach einem der vorhergehenden Ansprüche, bei der der Lagerring (15) wenigstens ein Loch (21) hat, durch das sich eine Befestigungsschraube (23) oder ein Befestigungsstift erstreckt, die mit dem Lagerring-Aufhängungsbereich (17) zusammenwirkt, wobei die Befestigungsschraube (23) oder der Befestigungsstift in das Loch (21) mit Spiel eingefügt ist, wie etwa in ein Langloch oder ein überdimensioniertes Loch.

4. Lagerstruktur nach Anspruch 3, bei der die Befestigungsschraube (23) in einer Montagebuchse (22) aufgenommen ist, die zwischen dem Kopf (24) der Schraube (23) und dem Lagerring-Aufhängungsbereich (17) festgeklemmt ist.

5. Lagerstruktur nach Anspruch 4, bei der die Montagebuchse (22) einen äußeren Kranz (25) hat und das Loch (21) in dem Lagerring (15) eine Einschnürung (26) hat, die von dem Kranz (25) bedeckt ist.

6. Lagerstruktur nach Anspruch 5, bei der die Einschnürung (26) zwischen den Kranz (25) und den Lagerring-Aufhängungsbereich (17) geklemmt ist.

7. Lagerstruktur nach einem der Ansprüche 4 bis 6, bei der die Montagebuchse (22) in dem Loch (21) in dem Lagerring (15) genau eingepasst aufgenommen ist.

8. Lagerstruktur nach einem der vorhergehenden Ansprüche, bei der der Lagerring (15) im Längsschnitt L-Förmig ist und einer (27) der Schenkel des Lagerrings (15) in Achsrichtung weist und der andere Schenkel (28) in radiale Richtung weist und der Lagerring-Aufhängungsbereich (7) dementsprechend L-förmig ist.

9. Lagerstruktur nach Anspruch 8, bei der der L-förmige Lagerring-Aufhängungsbereich (17) einen axialen Abschnitt (29) hat, dessen freies Ende die Nase (19) bildet, und sich der hakenförmige Rand (18) des Lagerrings (15) an dem axialen Schenkel (27) befindet.

10. Lagerringstruktur nach Anspruch 8, bei der der L-förmige Lagerring-Aufhängungsbereich (17) einen radialen Abschnitt (32) hat, dessen freies Ende die Nase (19) bildet, und sich der hakenförmige Rand (18) des Lagerrings (15) an dem radialen Schenkel (28) befindet.

11. Lagerringstruktur nach Anspruch 8, bei der sich bei Abhängigkeit von Anspruch 3 bis 6 das Loch (21) in dem axialen Schenkel (27) des Lagerrings (15) befindet und die Befestigungsschraube (23) oder der Befestigungsstift (30) mit dem axialen Abschnitt (29) des Lagerring-Aufhängungsbereiches (17) zusammenwirkt.

12. Lagerstruktur nach Anspruch 8, bei der sich bei Abhängigkeit von Anspruch 3 bis 6 das Loch (21) in dem radialen Schenkel (28) des Lagerrings (15) befindet und die Befestigungsschraube (23) oder der Befestigungsstift (30) mit dem radialen Abschnitt (32) des Lagerring-Aufhängungsbereiches (17) zusammenwirkt.

13. Lagerstruktur nach einem der vorhergehenden Ansprüche, bei der der Lagerring (15) zahlreiche Lagerringteile in der Umfangsrichtung enthält.

14. Schraubenvorrichtung, umfassend einen Laufkranz (2) und einen Rotor (4), der mit Schraubenblättern (5) ausgestattet und drehbar im Bezug auf den Laufkranz (2) mit Hilfe einer Lagerstruktur nach einem der vorhergehenden Ansprüche gelagert ist, wobei der Laufkranz (2) mit den Statorwicklungen (8) eines Elektromotors und der Rotor (4) mit den zugehörigen Dauermagneten (7) ausgestattet ist.

## Revendications

1. Structure de palier entre un rotor (4) et un manchon (2), telle que dans un dispositif à hélice, comprenant au moins un palier axial (9) et un palier radial (10), qui comprennent chacun une série de patins oscillants s'étendant dans la direction périphérique (11, 11') et qui sont chacun suspendus depuis une zone de suspension de patin (12) du rotor (4) ou du manchon (2) à l'aide de fixations de patin (13) qui permettent l'oscillation, lesquels patins oscillants (11, 11') présentent chacun une surface de contact (14, 14'), et une bague de roulement (15) qui est située à l'opposé des séries de patins oscillants (11, 11'), coopère avec leurs surfaces de contact (14, 14') et est suspendue depuis une zone de suspension de bague de roulement (17) du rotor (4) ou du manchon (2) à l'aide de fixations de bague de roulement (16), les fixations de bague de roulement (16) permettent des mouvements de contraction et d'expansion tels que des mouvements axiaux et/ou radiaux de la bague de roulement (15) par rapport à la zone de suspension de bague de roulement (17), **caractérisée en ce que** la bague de roulement (15) présente une arête (18), dont la section longitudinale présente une forme de crochet, et la zone de suspension de bague de roulement (17) présente un nez (19) en section longitudinale, autour duquel l'arête en forme de crochet (18) de la bague de roulement (15) s'étend.

2. Structure de palier selon la revendication 1, dans laquelle l'arête en forme de crochet (18) et le nez (19) coopèrent l'un avec l'autre à l'aide d'un assemblage à tenon et mortaise (20) qui permet des mouvements le long de l'axe dudit assemblage (20).

3. Structure de palier selon l'une quelconque des revendications précédentes, dans laquelle la bague de roulement (15) présente au moins un trou (21), par lequel un boulon de fixation (23) ou broche de fixation s'étend, laquelle coagit avec la zone de suspension de bague de roulement (17), lequel boulon de fixation (23) ou broche de fixation est inséré dans le trou (21) avec jeu, par exemple dans un trou en fente ou trou surdimensionné.

4. Structure de palier selon la revendication 3, dans laquelle le boulon de fixation (23) est logé dans une bague de montage (22) qui est serrée entre la tête (24) du boulon (23) et la zone de suspension de bague de roulement (17).

5. Structure de palier selon la revendication 4, dans laquelle la bague de montage (22) présente un collier externe (25) et le trou (21) dans la bague de roulement (15) présente un rétrécissement (26) qui est recouvert par le collier (25).

6. Structure de palier selon la revendication 5, dans laquelle le rétrécissement (26) est serré entre le collier (25) et la zone de suspension de bague de roulement (17).

7. Structure de palier selon l'une quelconque des revendications 4 à 6, dans laquelle la bague de montage (22) est logée de manière ajustée sérrée dans le trou (21) de la bague de roulement (15).

8. Structure de palier selon l'une quelconque des revendications précédentes, dans laquelle la section longitudinale de la bague de roulement (15) présente une forme de L, et l'une (27) des jambes de la bague de roulement (15) est dirigée axialement et l'autre jambe (28) est dirigée radialement et la zone de suspension de bague de roulement (7) présente en conséquence une forme de L.

9. Structure de palier selon la revendication 8, dans laquelle la zone de suspension de bague de roulement en forme de L (17) présente une section axiale (29), dont l'extrémité libre forme le nez (19) et l'arête en forme de crochet (18) de la bague de roulement (15) est située sur la jambe axiale (27).

10. Structure de palier selon la revendication 8, dans laquelle la zone de suspension de bague de roulement en forme de L (17) présente une section radiale (32), dont l'extrémité libre forme le nez (19) et l'arête en forme de crochet (18) de la bague de roulement (15) est située sur la jambe radiale (28).

11. Structure de palier selon la revendication 8, si elle dépend de l'une quelconque des revendications 3 à 6, dans laquelle le trou (21) est situé dans la jambe axiale (27) de la bague de roulement (15) et le boulon de fixation (23) ou la broche de fixation (30) coopère avec la section axiale (29) de la zone de suspension de bague de roulement (17).

12. Structure de palier selon la revendication 8, si elle dépend de l'une quelconque des revendications 3 à 6, dans laquelle le trou (21) est situé dans la jambe radiale (28) de la bague de roulement (15) et le boulon de fixation (23) ou la broche de fixation (30) coopère avec la section radiale (32) de la zone de suspension de bague de roulement (17).

13. Structure de palier selon l'une quelconque des revendications précédentes, dans laquelle la bague de roulement (15) comprend plusieurs parties de bague de roulement dans la direction périphérique.

14. Dispositif à hélice, comprenant un manchon (2) et un rotor (4) doté de pales d'hélice (5) qui est suspendu de manière à pouvoir tourner par rapport au manchon (2) à l'aide d'une structure de palier selon l'une quelconque des revendications précédentes, dans lequel le manchon (2) est doté d'enroulements de stator (8) d'un moteur électrique et le rotor (4) d'aimants permanents (7) associés.
